(19) **Europäisches Patentamt / European Patent Office / Office européen des brevets**

(11) **EP 4 776 731 A1**

(12) # EUROPEAN PATENT APPLICATION
published in accordance with Art. 153(4) EPC

(43) Date of publication:
**15.07.2026 Bulletin 2026/29**

(21) Application number: **24862030.4**

(22) Date of filing: **05.09.2024**

(51) International Patent Classification (IPC):
**H04W 72/231** (2023.01)

(52) Cooperative Patent Classification (CPC):
**H04W 72/1273; H04W 72/231; H04W 72/232**

(86) International application number:
**PCT/CN2024/117104**

(87) International publication number:
**WO 2025/051191 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 CN 202311160860**

(71) Applicants:
• **China Telecom Corporation Limited Technology
Innovation Center
Beijing 102209 (CN)**

• **China Telecom Corporation Limited
Beijing 100033 (CN)**

(72) Inventors:
• **WU, Jingzhou
Beijing 100033 (CN)**
• **YANG, Shan
Beijing 100033 (CN)**
• **YIN, Hang
Beijing 100033 (CN)**
• **SHE, Xiaoming
Beijing 100033 (CN)**

(74) Representative: **Murgitroyd & Company
165-169 Scotland Street
Glasgow G5 8PL (GB)**

(54) **INTERFERENCE PROCESSING METHOD, SYSTEM, BASE STATION AND TERMINAL**

(57) The present application relates to the technical field of communications, and to an interference processing method, a system, a base station and a terminal. The interference processing method in the present application is executed by a terminal, and comprises: receiving indication information sent by a base station, wherein the indication information is used for indicating whether current downlink scheduling comprises transmission of a multiplexing terminal in multi-user multiple-input multiple-output (MU-MIMO) and/or related information of the multiplexing terminal; and performing interference processing on the basis of the indication information.

```
┌──────────────────────────────────────────────────────────────┐
│  Base station transmits indication information to a terminal   │───  S102
│                                                                │
└──────────────────────────────────────────────────────────────┘
                                │
                                ▼
┌──────────────────────────────────────────────────────────────┐
│  The terminal performs interference processing according       │───  S104
│  to the indication information                                 │
│                                                                │
└──────────────────────────────────────────────────────────────┘
```

FIG. 1

EP 4 776 731 A1

**Description**

**CROSS-REFERENCE TO RELATED APPLICATIONS**

This application is based on and claims priority to Chinese Patent Application No. 202311160860.7, filed on September 8, 2023, the entire contents of which are incorporated herein by reference.

**TECHNICAL FIELD**

The present disclosure relates to the field of communication technologies, and in particular, to an interference processing method, system, base station, and terminal.

**BACKGROUND**

5G (5th Generation Mobile Communication Technology) NR (New Radio) base stations generally adopt MU-MIMO (Multi-User Multiple-Input Multiple-Output) in the 3.5 GHz and higher frequency bands to simultaneously transmit downlink data to multiple terminals (User Equipment, UE) on the same frequency, which can improve network throughput and single-user rate experience.

In MU-MIMO scenarios, terminals are subject to interference from co-scheduled terminals. Previously, it could only rely on base station side scheduling to avoid strong interference between terminals. Since base station scheduling needs to consider many factors such as fairness, traffic demand, and actual user location, the impact of such interference on downlink reception reliability remains significant in actual transmission.

3GPP (3rd Generation Partnership Project) Rel-17 (Release 17) first proposed terminal-side interference combining reception. Rel-18 will continue to study terminal-side interference processing.

**SUMMARY**

According to some embodiments of the present disclosure, an interference processing method is provided, performed by a terminal, including: receiving indication information transmitted by a base station, wherein the indication information is used to indicate whether a current downlink transmission has a transmission of a Multi-User Multiple-Input Multiple-Output (MU-MIMO) co-scheduled terminal and/or related information of the co-scheduled terminal; performing interference processing according to the indication information.

In some embodiments, the related information of the co-scheduled terminal includes a modulation order of the co-scheduled terminal, the indication information is first indication information, used to indicate that the current downlink transmission does not have a transmission of a MU-MIMO co-scheduled terminal, or the indication information is second indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists.

In some embodiments, the indication information is configured as 1-bit information.

In some embodiments, the related information of the co-scheduled terminal includes a modulation order of the co-scheduled terminal, the indication information is third indication information, used to indicate that the current downlink transmission does not have a transmission of a MU-MIMO co-scheduled terminal; or the indication information is fourth indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists; or the indication information is fifth indication information, used to indicate that the current downlink transmission has a transmission of a co-scheduled terminal, and the co-scheduled terminal and the terminal adopt a same modulation order on any one resource unit allocated to the terminal or any one resource unit where the co-scheduled terminal exists.

In some embodiments, the indication information is configured as 2-bit information.

In some embodiments, the related information of the co-scheduled terminal includes a modulation order of the co-scheduled terminal, the indication information is sixth indication information, used to indicate that the current downlink transmission does not have a transmission of a MU-MIMO co-scheduled terminal; or the indication information is seventh indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists, and the modulation order; or the indication information is eighth indication information, used to indicate that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists.

In some embodiments, the indication information is configured as 3-bit information.

In some embodiments, the modulation order includes: QPSK, 16QAM, 64QAM, 256QAM, 1024QAM.

In some embodiments, the related information of the co-scheduled terminal includes a configuration status of the co-scheduled terminal, and the indication information is used to indicate whether a configuration of the co-scheduled terminal meets a preset condition.

In some embodiments, the preset condition includes: at least one of time domain resource assignment information of the co-scheduled terminal, frequency domain resource assignment information of the co-scheduled terminal, a demodulation reference signal (DMRS) sequence, a precoding resource block bundling size (PRB bundling size), location information of a channel state information reference signal (CSI-RS), location information of a phase tracking reference signal (PT-RS), the preset condition is the same as the terminal.

In some embodiments, the resource unit includes a physical resource block (PRB) or a precoding resource block group (PRG).

In some embodiments, the related information of the co-scheduled terminal includes: at least one of a number of the co-scheduled terminal, a modulation order of the co-scheduled terminal, time domain resource assignment information of the co-scheduled terminal, frequency domain resource assignment information of the co-scheduled terminal, demodulation reference signal (DMRS) port allocation information of the co-scheduled terminal; the indication information is used to indicate at least one of the number of the co-scheduled terminal, the modulation order of the co-scheduled terminal, the time domain resource assignment information of the co-scheduled terminal, the frequency domain resource assignment information of the co-scheduled terminal, the demodulation reference signal (DMRS) port allocation information of the co-scheduled terminal.

In some embodiments, the method further includes: pre-negotiating configuration information with the base station, wherein the configuration information includes: at least one of a number of the co-scheduled terminal, a modulation order of the co-scheduled terminal, time domain resource assignment information of the co-scheduled terminal, frequency domain resource assignment information of the co-scheduled terminal, demodulation reference signal (DMRS) port allocation information of the co-scheduled terminal; wherein the indication information is used to indicate adopting the configuration information or a subset of the configuration information.

In some embodiments, the indication information includes at least one of: configuration information of a demodulation reference signal (DMRS) of each co-scheduled terminal, modulation and coding scheme table information of each co-scheduled terminal, configuration information of a channel state information reference signal (CSI-RS) of each co-scheduled terminal, configuration information of a phase tracking reference signal (PT-RS) of each co-scheduled terminal, configuration information of a tracking reference signal (TRS) of each co-scheduled terminal, time domain resource configuration information of the control channel of each co-scheduled terminal, time domain and frequency domain resource assignment information of each co-scheduled terminal, a number of co-scheduled terminals, modulation order information of each co-scheduled terminal, data layer number information of each co-scheduled terminal, DMRS port allocation information of each co-scheduled terminal.

In some embodiments, the indication information is carried by at least one of downlink control information (DCI), radio resource control (RRC) signaling, medium access control (MAC) control element (CE).

In some embodiments, the method further includes: transmitting capability information to the base station, wherein the capability information includes: information indicating whether the terminal supports inter-terminal interference processing for MU-MIMO.

In some embodiments, the capability information includes at least one of: information indicating whether the terminal supports interference suppression between MU-MIMO terminals based on an enhanced minimum mean square error interference rejection combining (E-MMSE-IRC) receiver, information indicating whether the terminal supports interference cancellation between MU-MIMO terminals based on a low complexity maximum likelihood (R-ML) receiver.

In some embodiments, the receiving indication information transmitted by the base station includes: in a case that the capability information includes information indicating that the terminal supports inter-terminal interference processing for MU-MIMO, receiving the indication information transmitted by the base station.

In some embodiments, the method further includes: receiving capability query information transmitted by the base station.

According to other embodiments of the present disclosure, an interference processing method is provided, including: transmitting indication information to a terminal, wherein the indication information is used to indicate whether a current downlink transmission has a transmission of a Multi-User Multiple-Input Multiple-Output (MU-MIMO) co-scheduled terminal and/or related information of the co-scheduled terminal, so that the terminal performs interference processing according to the indication information.

In some embodiments, the related information of the co-scheduled terminal includes a modulation order of the co-scheduled terminal, the indication information is first indication information, used to indicate that the current downlink transmission does not have a transmission of a MU-MIMO co-scheduled terminal, or the indication information is second indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists.

In some embodiments, the related information of the co-scheduled terminal includes a modulation order of the co-scheduled terminal, the indication information is third indication information, used to indicate that the current downlink transmission does not have a transmission of a MU-MIMO co-scheduled terminal; or the indication information is fourth indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists; or the indication information is fifth indication information, used to indicate that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists.

In some embodiments, the related information of the co-scheduled terminal includes a modulation order of the co-scheduled terminal, the indication information is sixth indication information, used to indicate that the current downlink transmission does not have a transmission of a MU-MIMO co-scheduled terminal; or the indication information is seventh indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists, and the modulation order; or the indication information is eighth indication information, used to indicate that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists.

In some embodiments, the related information of the co-scheduled terminal includes a configuration status of the co-scheduled terminal, and the indication information is used to indicate whether a configuration of the co-scheduled terminal meets a preset condition.

In some embodiments, the preset condition includes: at least one of time domain resource assignment information of the co-scheduled terminal, frequency domain resource assignment information of the co-scheduled terminal, a demodulation reference signal (DMRS) sequence, a precoding resource block bundling size (PRB bundling size), location information of a channel state information reference signal (CSI-RS), location information of a phase tracking reference signal (PT-RS), the preset condition is the same as the terminal.

In some embodiments, the related information of the co-scheduled terminal includes: at least one of a number of the co-scheduled terminal, a modulation order of the co-scheduled terminal, time domain resource assignment information of the co-scheduled terminal, frequency domain resource assignment information of the co-scheduled terminal, demodulation reference signal (DMRS) port allocation information of the co-scheduled terminal; the indication information is used to indicate at least one of the number of the co-scheduled terminal, the modulation order of the co-scheduled terminal, the time domain resource assignment information of the co-scheduled terminal, the frequency domain resource assignment information of the co-scheduled terminal, the demodulation reference signal (DMRS) port allocation information of the co-scheduled terminal.

In some embodiments, the indication information includes at least one of: configuration information of a demodulation reference signal (DMRS) of each co-scheduled terminal, modulation and coding scheme table information of each co-scheduled terminal, configuration information of a channel state information reference signal (CSI-RS) of each co-scheduled terminal, configuration information of a phase tracking reference signal (PT-RS) of each co-scheduled terminal, configuration information of a tracking reference signal (TRS) of each co-scheduled terminal, time domain resource configuration information of the control channel of each co-scheduled terminal, time domain and frequency domain resource assignment information of each co-scheduled terminal, a number of co-scheduled terminals, modulation order information of each co-scheduled terminal, data layer number information of each co-scheduled terminal, DMRS port allocation information of each co-scheduled terminal.

In some embodiments, the method further includes: receiving capability information transmitted by the terminal, wherein the capability information includes: information indicating whether the terminal supports inter-terminal interference processing for MU-MIMO; wherein the transmitting indication information to the terminal includes: in a case that the capability information includes information indicating that the terminal supports inter-terminal interference processing for MU-MIMO, transmitting the indication information to the terminal.

In some embodiments, the method further includes: transmitting capability query information to the terminal.

According to further embodiments of the present disclosure, a terminal is provided, including: a receiving module, configured to receive indication information transmitted by a base station, wherein the indication information is used to indicate whether a current downlink transmission has a transmission of a Multi-User Multiple-Input Multiple-Output (MU-MIMO) co-scheduled terminal and/or related information of the co-scheduled terminal; an interference processing module, configured to perform interference processing according to the indication information.

According to still further embodiments of the present disclosure, a base station is provided, including: a transmitting module, configured to transmit indication information to a terminal, wherein the indication information is used to indicate whether a current downlink transmission has a transmission of a Multi-User Multiple-Input Multiple-Output (MU-MIMO) co-scheduled terminal and/or related information of the co-scheduled terminal; so that the terminal performs interference processing according to the indication information.

According to further embodiments of the present disclosure, an electronic device is provided, including: a processor; and a memory coupled to the processor, configured to store instructions, which, when executed by the processor, cause the processor to perform the interference processing method according to any of the preceding embodiments.

According to still further embodiments of the present disclosure, a computer-readable storage medium is provided, having a computer program stored thereon, wherein the computer program, when executed by a processor, implements the steps of the method according to any of the preceding embodiments.

According to further embodiments of the present disclosure, an interference processing system is provided, including: the terminal according to any of the preceding embodiments and the base station according to any of the preceding embodiments.

According to still further embodiments of the present disclosure, a computer program product is provided, including: instructions, which, when executed by a processor, cause the processor to perform the interference processing method according to any of the preceding embodiments.

According to further embodiments of the present disclosure, a computer program is provided, including: instructions, which, when executed by a processor, cause the processor to perform the interference processing method according to any of the preceding embodiments.

The other features and advantages of the present disclosure will become clear through the following detailed description of exemplary embodiments of the present disclosure with reference to the accompanying drawings.

**BRIEF DESCRIPTION OF THE DRAWINGS**

In order to illustrate the embodiments of the present disclosure more clearly, the drawings used in the embodiments or description of prior art will be described briefly. Apparently, the following described drawings are merely for the embodiments of the present disclosure, and other drawings can be derived by those of ordinary skill in the art without any creative effort.

FIG. 1 shows a schematic flowchart of an interference processing method according to some embodiments of the present disclosure.

FIG. 2 shows a schematic flowchart of an interference processing method according to other embodiments of the present disclosure.

FIG. 3 shows a schematic structural diagram of a terminal according to some embodiments of the present disclosure.

FIG. 4 shows a schematic structural diagram of a base station according to some embodiments of the present disclosure.

FIG. 5 shows a schematic structural diagram of an electronic device according to some embodiments of the present disclosure.

FIG. 6 shows a schematic structural diagram of an electronic device according to other embodiments of the present disclosure.

FIG. 7 shows a schematic structural diagram of an interference processing system according to some embodiments of the present disclosure.

**DETAILED DESCRIPTION**

The technical solutions in the embodiments of the present disclosure will be clearly and completely described below with reference to the accompanying drawings in the embodiments of the present disclosure. Obviously, the described embodiments are only a part of the embodiments of the present disclosure, but not all of the embodiments. The following description of at least one exemplary embodiment is merely illustrative and is in no way intended as any limitation to the present disclosure and its application or use. Based on the embodiments in the present disclosure, all other embodiments obtained by those of ordinary skill in the art without creative effort shall fall within the scope of protection of the present disclosure.

The inventors have found that: current standards mainly propose that terminals can support advanced reception for interference processing, but they lack related design for the signaling process for implementation of interference processing at a terminal side. In view of this, the present disclosure proposes an interference processing method, system, base station, and terminal.

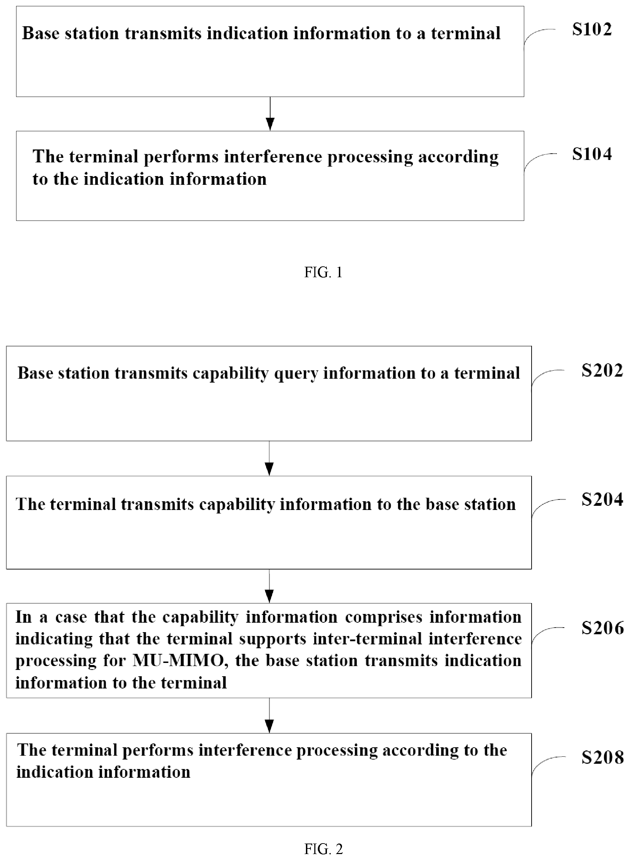

The present disclosure proposes an interference processing method, which will be described below with reference to FIGS. 1-2.

FIG. 1 is a flowchart of some embodiments of the interference processing method of the present disclosure. As shown in FIG. 1, the method of this embodiment includes: steps S102-S104.

In step S102, the base station transmits indication information to the terminal, and correspondingly, the terminal receives the indication information transmitted by the base station.

In some embodiments, the indication information is used to indicate whether the current downlink transmission has a transmission of a MU-MIMO co-scheduled terminal and/or related information of the co-scheduled terminal. The terminal receiving the indication information may serve as a target terminal (Target UE). The base station performs joint scheduling (Co-scheduled) of the target terminal with one or more other terminals for MU-MIMO transmission. Among the jointly scheduled multiple terminals, for the target terminal, the other terminals may be referred to as co-scheduled terminals or jointly scheduled terminals (Co-scheduled UE). That is, the indication information may be used to indicate whether there is a jointly scheduled terminal and related information of the jointly scheduled terminal.

The indication information serves as auxiliary information to assist the terminal in interference processing. In some embodiments, the indication information is carried by at least one of DCI (Downlink Control Information), RRC (Radio Resource Control) signaling, and MAC CE (Medium Access Control-Control Element).

The indication information may be represented in different forms. In some embodiments, the related information of the co-scheduled terminal includes a modulation order of the co-scheduled terminal, the indication information is first indication information, used to indicate that the current downlink transmission does not have a transmission of a MU-MIMO co-scheduled terminal, or, the indication information is second indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists.

In some embodiments, the resource unit includes a PRB (Physical Resource Block) or a PRG (Precoding resource block group).

For example, the indication information is configured as 1-bit information. For example, the first indication information is 0, indicating that the current downlink transmission does not have a transmission of a MU-MIMO co-scheduled terminal, and the second indication information is 1, indicating that the current downlink transmission has a transmission of a MU-MIMO co-scheduled terminal, and the co-scheduled terminal and the terminal adopt a same modulation order on all resource units allocated to the terminal or all resource units where the co-scheduled terminal exists.

With the above embodiments, the base station can inform the target terminal only through 1-bit indication information whether the current downlink transmission has a transmission of a MU-MIMO co-scheduled terminal, and on all resource units allocated to the target terminal or all resource units where the co-scheduled terminal exists, all co-scheduled terminals in the current downlink transmission adopt the same modulation order as the target terminal.

In some embodiments, the related information of the co-scheduled terminal includes a configuration status of the co-scheduled terminal, and the indication information is used to indicate whether the configuration of the co-scheduled terminal meets a preset condition (default configuration), or, the indication information is used to indicate that in the case that the current downlink transmission has a transmission of a MU-MIMO co-scheduled terminal, the configuration of the co-scheduled terminal meets the preset condition, or, the indication information is directly used to indicate that the configuration of the co-scheduled terminal meets the preset condition. The indication information may also be used to indicate that the current downlink transmission has a transmission of a MU-MIMO co-scheduled terminal, and the configuration of the co-scheduled terminal does not meet the preset condition.

The preset condition includes: at least one of time domain resource assignment information of the co-scheduled terminal, frequency domain resource assignment information of the co-scheduled terminal, a DMRS (Demodulation Reference Signal) sequence, a PRB bundling size (precoding resource block bundling size), location information of a CSI-RS (Channel State Information Reference Signal), location information of a PT-RS (Phase-tracking reference signals), the preset condition is the same as the terminal.

For example, the indication information is first indication information, further used to indicate that the current downlink transmission has a transmission of a MU-MIMO co-scheduled terminal, and the configuration of the co-scheduled terminal does not meet the preset condition, and the indication information is second indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists, and the configuration of the co-scheduled terminal meets the preset condition.

In some embodiments, the indication information is third indication information, used to indicate that the current downlink transmission does not have a transmission of a MU-MIMO co-scheduled terminal; or, the indication information is fourth indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists; or, the indication information is fifth indication information, used to indicate that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists.

For example, the indication information is configured as 2-bit information. For example, the third indication information is 00, indicating that the current downlink transmission does not have a transmission of a MU-MIMO co-scheduled terminal, the fourth indication information is 01, indicating that the current downlink transmission has a transmission of a MU-MIMO co-scheduled terminal, and the co-scheduled terminal and the terminal adopt a same modulation order on all resource units allocated to the terminal or all resource units where the co-scheduled terminal exists, the fifth indication information is 10, indicating that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists. The indication information may also be set to 11 to indicate other situations, for example, indicating that the current downlink transmission has a transmission of a MU-MIMO co-scheduled terminal, but the co-scheduled terminal and the terminal have different modulation orders, not limited to the examples given.

The co-scheduled terminal and the terminal adopt a same modulation order on any one resource unit allocated to the terminal or any one resource unit where the co-scheduled terminal exists, meaning that on a first resource unit, the co-scheduled terminal and the terminal both adopt a first modulation order, on a second resource unit, the co-scheduled terminal and the terminal both adopt a second modulation order, ... that is, on the same resource unit, the co-scheduled terminal and the terminal adopt the same modulation order, and between different resource units, the co-scheduled terminal and the terminal may adopt different modulation orders.

In some embodiments, the indication information is third indication information, further used to indicate that the current downlink transmission has a transmission of a MU-MIMO co-scheduled terminal, and the configuration of the co-scheduled terminal does not meet the preset condition, and when the indication information is fourth indication information or fifth indication information, it is further used to indicate that the current downlink transmission has a transmission of a MU-MIMO co-scheduled terminal, and the configuration of the co-scheduled terminal meets the preset condition.

With the above embodiments, the base station can inform the target terminal through 2-bit indication information whether the current downlink transmission has a transmission of a MU-MIMO co-scheduled terminal, or inform the target terminal whether, on all resource units allocated to the target terminal or all resource units where the co-scheduled terminal exists, all co-scheduled terminals in the current downlink transmission adopt the same modulation order as the target terminal; if all co-scheduled terminals in the current downlink transmission do not adopt the same modulation order as the target terminal on all resource units allocated to the target terminal or all resource units where the co-scheduled terminal exists, inform the target terminal whether all co-scheduled terminals in the current downlink transmission adopt the same modulation order as the target terminal on any one resource unit allocated to the target terminal or any one resource unit where the co-scheduled terminal exists.

In some embodiments, the indication information is sixth indication information, used to indicate that the current downlink transmission does not have a transmission of a MU-MIMO co-scheduled terminal; or the indication information is seventh indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists, and the modulation order; or, the indication information is eighth indication information, used to indicate that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists.

For example, the indication information is configured as 3-bit information. The seventh indication information may be further divided into multiple sub-information according to the data volume of the modulation order. For example, the modulation order comprises: QPSK, 16QAM, 64QAM, 256QAM, 1024QAM. The seventh indication information may be divided into first sub-information to fifth sub-information.

For example, the sixth indication information is 000, indicating that the current downlink transmission does not have a transmission of a MU-MIMO co-scheduled terminal, the first sub-information is 001, indicating that the current downlink transmission has a transmission of a MU-MIMO co-scheduled terminal, and the co-scheduled terminal and the terminal adopt a same modulation order on all resource units allocated to the terminal or all resource units where the co-scheduled terminal exists and the modulation order is QPSK, the second sub-information is 010, indicating that the current downlink transmission has a transmission of a MU-MIMO co-scheduled terminal, and the co-scheduled terminal and the terminal adopt a same modulation order on all resource units allocated to the terminal or all resource units where the co-scheduled terminal exists and the modulation order is 16QAM, the third sub-information is 011, indicating that the current downlink transmission has a transmission of a MU-MIMO co-scheduled terminal, and the co-scheduled terminal and the terminal adopt a same modulation order on all resource units allocated to the terminal or all resource units where the co-scheduled terminal exists and the modulation order is 64QAM, the fourth sub-information is 100, indicating that the current downlink transmission has a transmission of a MU-MIMO co-scheduled terminal, and the co-scheduled terminal and the terminal adopt a same modulation order on all resource units allocated to the terminal or all resource units where the co-scheduled terminal exists and the modulation order is 256QAM, the fifth sub-information is 101, indicating that the current downlink transmission has a transmission of a MU-MIMO co-scheduled terminal, and the co-scheduled terminal and the terminal adopt a same modulation order on all resource units allocated to the terminal or all resource units where the co-scheduled terminal exists and the modulation order is 1024QAM, the eighth indication information is 110, indicating that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists. The co-scheduled terminal may be a terminal that has the same root DMRS sequence (root DMRS sequence) as the terminal.

The indication information may also be configured as 111 to indicate other situations, for example, indicating that the current downlink transmission has a transmission of a MU-MIMO co-scheduled terminal, but the co-scheduled terminal and the terminal have different modulation orders, not limited to the examples given.

In some embodiments, the indication information is sixth indication information, further used to indicate that the current downlink transmission has a transmission of a MU-MIMO co-scheduled terminal, and the configuration of the co-scheduled terminal does not meet the preset condition, and when the indication information is seventh indication information or eighth indication information, it is further used to indicate that the current downlink transmission has a transmission of a MU-MIMO co-scheduled terminal, and the configuration of the co-scheduled terminal meets the preset condition.

With the above embodiments, the base station can inform the target terminal through 3-bit indication information whether the current downlink transmission has a transmission of a MU-MIMO co-scheduled terminal, or inform the target terminal whether the co-scheduled terminal in the current downlink transmission adopts the same modulation order as the target terminal on all resource units allocated to the target terminal or all resource units where the co-scheduled terminal exists, and the modulation order is one of QPSK/16QAM/64QAM/256QAM/1024QAM; if all co-scheduled terminals in the current downlink transmission do not adopt the same modulation order as the target terminal on all resource units allocated to the target terminal or all resource units where the co-scheduled terminal exists, inform the target terminal whether the co-scheduled terminal in the current downlink transmission adopts the same modulation order as the target terminal on any one resource unit allocated to the target terminal or any one resource unit where the co-scheduled terminal exists.

In some embodiments, the terminal pre-negotiates configuration information with the base station, wherein the configuration information includes at least one of a number of the co-scheduled terminal, a modulation order of the co-scheduled terminal, time domain resource assignment information of the co-scheduled terminal, frequency domain resource assignment information of the co-scheduled terminal, DMRS port (Port) allocation information of the co-scheduled terminal.

In some embodiments, the indication information is used to indicate adopting the configuration information or a subset of the configuration information.

The base station (or network) pre-negotiates and agrees on a series of configuration information with the terminal. This configuration information may be fixed by protocol or delivered by the network through higher layer information. During actual transmission, the base station can inform through indication information which of the above configuration or subsets of configurations the current transmission belongs to.

Different configuration information may form multiple configuration information groups, and the values in each configuration information group are different, including at least one of a number of the co-scheduled terminal, a modulation order of the co-scheduled terminal, time domain resource assignment information of the co-scheduled terminal, frequency domain resource assignment information of the co-scheduled terminal, DMRS port allocation information of the co-scheduled terminal. The indication information is used to indicate the adopted configuration information group.

For example, multiple combinations of the number of co-scheduled terminals, modulation order, time-frequency resource allocation, and DMRS port allocation are pre- negotiated, indicated by different indexes. Then, during actual transmission, the network can send index information to indicate the configuration information group of the current co-scheduled terminal to the terminal (e.g., sending 1 indicates: one terminal, QPSK, full bandwidth full time slot transmission, DMRS port 0).

In some embodiments, the related information of the co-scheduled terminal includes: at least one of a number of the co-scheduled terminal, a modulation order of the co-scheduled terminal, time domain resource assignment information of the co-scheduled terminal, frequency domain resource assignment information of the co-scheduled terminal, DMRS port allocation information of the co-scheduled terminal; the indication information is used to indicate at least one of the number of the co-scheduled terminal, the modulation order of the co-scheduled terminal, the time domain resource assignment information of the co-scheduled terminal, the frequency domain resource assignment information of the co-scheduled terminal, the DMRS port allocation information of the co-scheduled terminal.

The base station can directly send the above configuration information to the terminal through the indication information.

In some embodiments, the indication information includes at least one of: configuration information of a DMRS of each co-scheduled terminal, modulation and coding scheme table information of each co-scheduled terminal, configuration information of a CSI-RS of each co-scheduled terminal, configuration information of a PT-RS of each co-scheduled terminal, configuration information of a TRS (Tracking Reference Signal) of each co-scheduled terminal, time domain resource configuration information of the control channel of each co-scheduled terminal, time domain and frequency domain resource assignment information of each co-scheduled terminal, a number of co-scheduled terminals, modulation order information of each co-scheduled terminal, data layer number information of each co-scheduled terminal, DMRS port allocation information of each co-scheduled terminal. In this case, the indication information by default indicates that the current downlink transmission has a transmission of a MU-MIMO co-scheduled terminal, and may additionally include bits indicating that the current downlink transmission has a transmission of a MU-MIMO co-scheduled terminal.

For example, the DMRS configuration information includes: DMRS additional positions (dmrs-AdditionalPosition), DMRS type (dmrs-Type), maximum length (maxLength). For example, the DMRS port allocation information includes DMRS port index (Port Index).

When there is information of multiple co-scheduled terminals, the base station can distinguish different co-scheduled terminals by additionally sending identifiers (e.g., index numbers).

In step S104, the terminal performs interference processing according to the indication information.

In some embodiments, if the terminal learns the time domain resource assignment information and frequency domain resource assignment information of the co-scheduled terminal through the indication information or through pre-negotiation, it can determine the time-frequency domain resources where interference from the co-scheduled terminal exists, and thus perform interference processing on the corresponding time-frequency domain resources. The target terminal may consider that interference exists on each time-frequency resource used by the co-scheduled terminal, and it is necessary to apply interference processing algorithms, reducing the resource consumption of the terminal for additionally detecting on each time-frequency resource and then deciding whether to perform interference processing.

In some embodiments, if the terminal learns the number of co-scheduled terminals and/or the DMRS port allocation information of the co-scheduled terminal through the indication information or through pre-negotiation, it can determine the number of co-scheduled terminals that need interference processing, and thus perform interference processing according to the number of co-scheduled terminals that need interference processing.

In some embodiments, if the terminal learns the DMRS configuration information, DMRS sequence of the co-scheduled terminal or that the DMRS sequence of the co-scheduled terminal is the same as the configuration of the terminal through the indication information or through pre-negotiation, it can perform channel estimation for the co-scheduled terminal according to the DMRS sequence of the co-scheduled terminal. This reduces the resource consumption of the terminal required to attempt channel estimation for the co-scheduled terminal by traversing all possible DMRS generation sequences according to the protocol.

In some embodiments, if the terminal learns the PRB bundling size (precoding resource block bundling size) of the co-scheduled terminal or that the precoding resource block bundling size of the co-scheduled terminal is the same as the configuration of the terminal through the indication information or through pre-negotiation, it can perform channel estimation with the granularity of the precoding resource block bundling size of the co-scheduled terminal to obtain greater channel estimation accuracy; otherwise, the terminal can only perform channel estimation per PRB, which will reduce channel estimation accuracy.

In some embodiments, if the terminal learns the CSI-RS/PT-RS/TRS configuration information, location information of the CSI-RS/PT-RS/TRS of the co-scheduled terminal or that the location information of the CSI-RS/PT-RS/TRS of the co-scheduled terminal is the same as the configuration of the terminal through the indication information or through pre-negotiation, the terminal determines that when the CSI-RS/PT-RS/TRS of the co-scheduled terminal overlaps with the data resources of the terminal, it needs to use QPSK for interference processing on the corresponding resources, and use the modulation order indicated by the indication information on non-overlapping resources.

In some embodiments, if the terminal learns the modulation and coding scheme information of the co-scheduled terminal through the indication information or through pre-negotiation, in the case of supporting blind detection of modulation order, performing blind detection according to the modulation and coding scheme information can reduce the computational load of blind detection and improve detection accuracy.

In some embodiments, if the terminal learns the time domain resource configuration information of the control channel of the co-scheduled terminal through the indication information or through pre-negotiation, it can determine the time domain resources that the data channel may occupy (e.g., a total of 14 symbols, for data channel + control channel + blank symbols) according to this information, and thus perform interference processing on the time domain resources occupied by the data channel.

In some embodiments, if the terminal learns the data layer number information of the co-scheduled terminal through the indication information or through pre-negotiation, it can determine how many co-scheduled terminals are performed channel estimation on, and then perform interference suppression.

In some embodiments, if the terminal learns the modulation order of the co-scheduled terminal through the indication information or through pre-negotiation, in the case that the terminal supports interference cancellation between MU-MIMO terminals based on an R-ML (low complexity maximum likelihood) receiver, the terminal performs channel estimation according to the DMRS of the terminal and the co-scheduled terminal, respectively obtaining channel information h of the own terminal and the co-scheduled terminal; the terminal receives the transmission signals y corresponding to the own terminal and the co-scheduled terminal on the allocated time-frequency resources; the terminal traverses all transmission symbol combinations s1, s2, s3... of the own terminal and the co-scheduled terminal under the modulation order according to the modulation order of own terminal and the co-scheduled terminal; the terminal determines the Euclidean distance between y and hs1, hs2, hs3; takes the minimum value of each Euclidean distance, and calculates the log-likelihood ratio (LLR) of the transmission bit according to the R-ML formula given below.

$$L = \min_{s \in X^0} \left\{ \frac{1}{\sigma^2} \|y - Hs\|^2 \right\} - \min_{s \in X^1} \left\{ \frac{1}{\sigma^2} \|y - Hs\|^2 \right\}$$

y represents the received symbol vector; H represents the channel matrix of the co-scheduled terminal and the target terminal (own terminal); s represents the detected symbol; σ represents noise; $X^0$ represents the symbol set corresponding to bit 0 of the transmitted symbol; $X^1$ represents the symbol set corresponding to bit 1 of the transmitted symbol; L represents the log-likelihood ratio LLR of the bit.

In the case that the terminal supports interference cancellation between MU-MIMO terminals based on an E-MMSE-IRC (enhanced minimum mean square error interference rejection combining) receiver, the terminal performs interference suppression according to the following formula.

$$\hat{x}_{S+I} = H_{S+I}^H (H_{S+I} H_{S+I}^H + R_N)^{-1} y, where \ \ H_{S+I}^H = (H_S \ \ H_I)$$

$H_{S+I}^H$ represents the joint channel matrix of the co-scheduled terminal and the target terminal (own terminal); $R_N$ represents the white noise covariance matrix, y represents the received symbol vector.

In the method of the above embodiments, the terminal receives indication information transmitted by the base station, where the indication information is used to indicate whether the current downlink transmission has a transmission of a MU-MIMO co-scheduled terminal and/or related information of the co-scheduled terminal, and the terminal performs interference processing according to the indication information. Since the base station side has a clearer understanding of the scheduling situation of MU-MIMO terminals and related information of co-scheduled terminals, by the base station transmitting indication information to the terminal, the terminal does not need to perform interference processing after self-detection, and the terminal can perform interference processing more accurately and timely according to the indication information, thereby improving the accuracy of downlink reception. Moreover, in the absence of co-scheduled terminals, it also reduces the resource consumption of the terminal.

The method of the above embodiments also proposes perform pre-configuration on the co-scheduled terminal, and the method implemented by the network side through limited-bit indication information, ensures that the terminal performs interference processing while significantly reducing the load of the PDCCH (physical downlink control channel). Through the transmission of indication information, it also helps avoid the terminal vainly performing channel estimation for co-scheduled terminals in non-MU-MIMO scenarios, thereby reducing the resource consumption of the terminal.

FIG. 2 is a flowchart of other embodiments of the interference processing method of the present disclosure. As shown in FIG. 2, the method of this embodiment includes: steps S202-S208.

In step S202, the base station transmits capability query information to the terminal, and correspondingly, the terminal receives the capability query information transmitted by the base station.

In step S204, the terminal transmits capability information to the base station, and correspondingly, the base station receives the capability information transmitted by the terminal.

In some embodiments, the capability information includes: information indicating whether the terminal supports inter-terminal interference processing for MU-MIMO.

In some embodiments, the capability information includes at least one of: information indicating whether the terminal supports interference suppression between MU-MIMO terminals based on an E-MMSE-IRC receiver, information indicating whether the terminal supports interference cancellation between MU-MIMO terminals based on an R-ML receiver.

In step S206, in a case that the capability information includes information indicating that the terminal supports inter-terminal interference processing for MU-MIMO, the base station transmits indication information to the terminal, and correspondingly, the terminal receives the indication information transmitted by the base station.

The indication information may distinguish between the case where the terminal supports E-MMSE-IRC receiver and the case where the terminal supports the supporting R-ML receiver and different information are transmitted, or the same information may be transmitted. For example, the information such as the modulation order, CSI-RS/PT-RS/TRS location information or configuration information, modulation and coding scheme table information, are only applicable to the case where the terminal supports the R-ML receiver. When the terminal supports the R-ML receiver, the indication information may be used to indicate related information such as the modulation order of the co-scheduled terminal, CSI-RS/PT-RS/TRS location information or configuration information, modulation and coding scheme table information. For example, the co-scheduled terminal and the terminal adopt a same modulation order on all resource units allocated to the terminal or all resource units where the co-scheduled terminal exists, reference is made to the preceding embodiments, and details are not repeated here.

In step S208, the terminal performs interference processing according to the indication information.

The terminal uses the E-MMSE-IRC receiver or the R-ML receiver for interference suppression or cancellation.

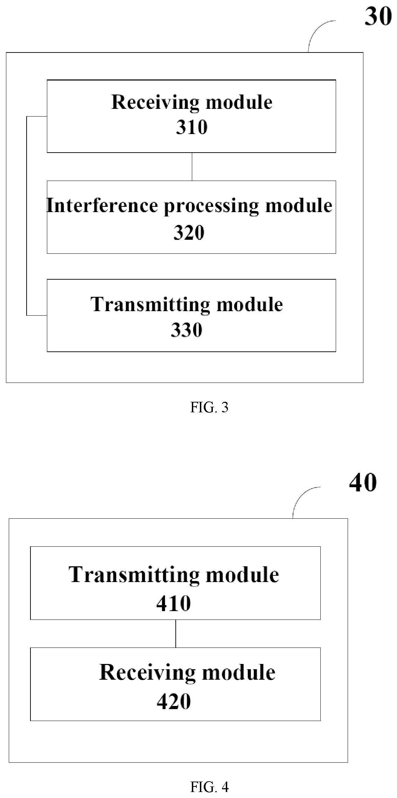

The present disclosure also provides a terminal, which will be described below with reference to FIG. 3.

FIG. 3 is a structural diagram of some embodiments of the terminal of the present disclosure. As shown in FIG. 3, the terminal 30 of this embodiment includes: a receiving module 310, and an interference processing module 320.

The receiving module 310 is configured to receive indication information transmitted by a base station, wherein the indication information is used to indicate whether a current downlink transmission has a transmission of a Multi-User Multiple-Input Multiple-Output (MU-MIMO) co-scheduled terminal and/or related information of the co-scheduled terminal.

The interference processing module 320 is configured to perform interference processing according to the indication information.

In some embodiments, the terminal 30 further includes a transmitting module 330, configured to transmit capability information to the base station, wherein the capability information includes: information indicating whether the terminal supports inter-terminal interference processing for MU-MIMO. The capability information includes at least one of: information indicating whether the terminal supports interference suppression between MU-MIMO terminals based on an enhanced minimum mean square error interference rejection combining (E-MMSE-IRC) receiver, information indicating whether the terminal supports interference cancellation between MU-MIMO terminals based on a low complexity maximum likelihood (R-ML) receiver.

In some embodiments, in a case that the capability information includes information indicating that the terminal supports inter-terminal interference processing for MU-MIMO, the receiving module 310 is configured to receive the indication information transmitted by the base station.

In some embodiments, the receiving module 310 is further configured to receive capability query information transmitted by the base station. The transmitting module 330 is configured to transmit the capability information to the base station in response to the capability query information.

The specific content and form of the indication information may refer to the preceding embodiments, and details are not repeated here.

The present disclosure also provides a base station, which will be described below with reference to FIG. 4.

FIG. 4 is a structural diagram of some embodiments of the base station of the present disclosure. As shown in FIG. 4, the base station 40 of this embodiment includes: a transmitting module 410.

The transmitting module 410 is configured to transmit indication information to a terminal, wherein the indication information is used to indicate whether a current downlink transmission has a transmission of a Multi-User Multiple-Input Multiple-Output (MU-MIMO) co-scheduled terminal and/or related information of the co-scheduled terminal; so that the terminal performs interference processing according to the indication information.

In some embodiments, the base station 40 further includes a receiving module 420, configured to receive capability information transmitted by the terminal, wherein the capability information includes: information indicating whether the terminal supports inter-terminal interference processing for MU-MIMO. The transmitting module 410 is configured to, in a case that the capability information includes information indicating that the terminal supports inter-terminal interference processing for MU-MIMO, transmit the indication information to the terminal.

In some embodiments, the transmitting module 410 is further configured to transmit capability query information to the terminal.

The specific content and form of the indication information may refer to the preceding embodiments, and details are not repeated here.

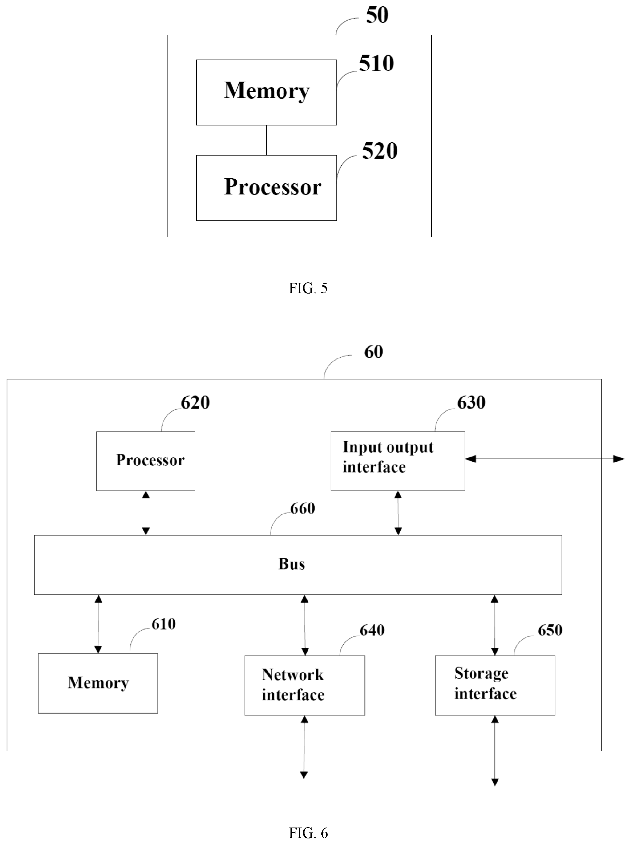

The electronic devices (terminal or base station) in the embodiments of the present disclosure may be implemented by various computing devices or computer systems. The following describes with reference to FIG. 5 and FIG. 6.

FIG. 5 is a structural diagram of some embodiments of an electronic device of the present disclosure. As shown in FIG. 5, the electronic device 50 of this embodiment includes: a memory 510 and a processor 520 coupled to the memory 510. The processor 520 is configured to, based on instructions stored in the memory 510, perform the interference processing method according to any embodiments of the present disclosure.

The memory 510 may, for example, include system memory, fixed non-volatile storage media, etc. The system memory stores, for example, an operating system, application programs, a boot loader (Boot Loader), a database, and other programs.

FIG. 6 is a structural diagram of other embodiments of an electronic device of the present disclosure. As shown in FIG. 6, the electronic device 60 of this embodiment includes: a memory 610 and a processor 620, similar to the memory 510 and the processor 520, respectively. It may further include an input output interface 630, a network interface 640, a storage interface 650, etc. These interfaces 630, 640, 650, the memory 610, and the processor 620 may, for example, be connected through a bus 660. The input output interface 630 provides a connection interface for display, mouse, keyboard, touch screen, and other input output devices. The network interface 640 provides a connection interface for various networking devices, for example, it may be connected to a database server or a cloud storage server. The storage interface 650 provides a connection interface for external storage devices such as SD cards and USB flash drives.

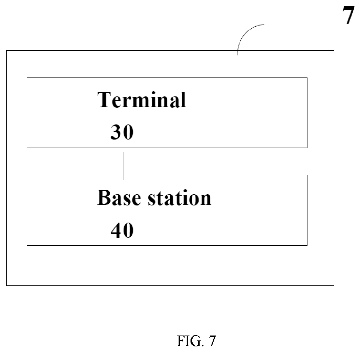

The present disclosure also provides an interference processing system, which will be described below with reference to FIG. 7.

FIG. 7 is a structural diagram of some embodiments of the interference processing system of the present disclosure. As shown in FIG. 7, the system 7 of this embodiment includes: the terminal 30 according to any of the preceding embodiments and the base station 40 according to any of the preceding embodiments. One base station 40 may correspond to multiple terminals 30, and each terminal 30 may serve as a target terminal.

The present disclosure also provides a computer program product, including: instructions, which, when executed by a processor, cause the processor to perform the interference processing method according to any embodiments of the present disclosure.

The present disclosure also provides a computer program, including: instructions, which, when executed by a processor, cause the processor to perform the interference processing method according to any embodiments of the present disclosure.

Those skilled in the art will understand that the embodiments of the present disclosure may be provided as a method, system, or computer program product. Therefore, the present disclosure may take the form of an entirely hardware embodiment, an entirely software embodiment, or an embodiment combining software and hardware aspects. Moreover, the present disclosure may take the form of a computer program product implemented on one or more computer-usable non-transitory storage media (including but not limited to disk storage, CD-ROM, optical storage, etc.) having computer-usable program code embodied therein.

The present disclosure is described with reference to flowchart illustrations and/or block diagrams of methods, apparatus (systems), and computer program products according to embodiments of the present disclosure. It will be understood that each flow and/or block of the flowchart illustrations and/or block diagrams, and combinations of flows and/or blocks in the flowchart illustrations and/or block diagrams, can be implemented by computer program instructions. These computer program instructions may be provided to a processor of a general purpose computer, special purpose computer, embedded processor, or other programmable data processing apparatus to produce a machine, such that the instructions, which execute via the processor of the computer or other programmable data processing apparatus, create means for implementing the functions specified in the flowchart flow or flows and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart flow or flows and/or block diagram block or blocks.

These computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions specified in the flowchart flow or flows and/or block diagram block or blocks.

The foregoing descriptions are only preferred embodiments of the present disclosure and are not intended to limit the present disclosure. Any modifications, equivalent replacements, improvements, etc., made within the spirit and principle of the present disclosure shall be included within the protection scope of the present disclosure.

**Claims**

1.  An interference processing method, performed by a terminal, comprising:

    receiving indication information transmitted by a base station, wherein the indication information is used to indicate whether a current downlink transmission has a transmission of a Multi-User Multiple-Input Multiple-Output (MU-MIMO) co-scheduled terminal and/or related information of the co-scheduled terminal;
    performing interference processing according to the indication information.

2. The interference processing method according to claim 1, wherein the related information of the co-scheduled terminal comprises a modulation order of the co-scheduled terminal,

the indication information is first indication information, used to indicate that the current downlink transmission does not have a transmission of a MU-MIMO co-scheduled terminal, or
the indication information is second indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists.

3. The interference processing method according to claim 2, wherein the indication information is configured as 1-bit information.

4. The interference processing method according to claim 1, wherein the related information of the co-scheduled terminal comprises a modulation order of the co-scheduled terminal,

the indication information is third indication information, used to indicate that the current downlink transmission does not have a transmission of a MU-MIMO co-scheduled terminal; or
the indication information is fourth indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists; or
the indication information is fifth indication information, used to indicate that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists.

5. The interference processing method according to claim 4, wherein the indication information is configured as 2-bit information.

6. The interference processing method according to claim 1, wherein the related information of the co-scheduled terminal comprises a modulation order of the co-scheduled terminal,

the indication information is sixth indication information, used to indicate that the current downlink transmission does not have a transmission of a MU-MIMO co-scheduled terminal; or
the indication information is seventh indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists, and the modulation order; or
the indication information is eighth indication information, used to indicate that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists.

7. The interference processing method according to claim 6, wherein the indication information is configured as 3-bit information.

8. The interference processing method according to claim 6 or 7, wherein the modulation order comprises: QPSK, 16QAM, 64QAM, 256QAM, 1024QAM.

9. The interference processing method according to any one of claims 1 to 8, wherein the related information of the co-scheduled terminal comprises a configuration status of the co-scheduled terminal, and the indication information is used to indicate whether a configuration of the co-scheduled terminal meets a preset condition.

10. The interference processing method according to claim 9, wherein the preset condition comprises: at least one of time domain resource assignment information of the co-scheduled terminal, frequency domain resource assignment information of the co-scheduled terminal, a demodulation reference signal (DMRS) sequence, a precoding resource block bundling size (PRB bundling size), location information of a channel state information reference signal (CSI-RS), location information of a phase tracking reference signal (PT-RS), the preset condition is the same as the terminal.

11. The interference processing method according to any one of claims 2 to 8, wherein the resource unit comprises a physical resource block (PRB) or a precoding resource block group (PRG).

12. The interference processing method according to any one of claims 1, 9 to 10, wherein:

the related information of the co-scheduled terminal comprises: at least one of a number of the co-scheduled terminal, a modulation order of the co-scheduled terminal, time domain resource assignment information of the co-scheduled terminal, frequency domain resource assignment information of the co-scheduled terminal, demodulation reference signal (DMRS) port allocation information of the co-scheduled terminal;
the indication information is used to indicate at least one of the number of the co-scheduled terminal, the modulation order of the co-scheduled terminal, the time domain resource assignment information of the co-scheduled terminal, the frequency domain resource assignment information of the co-scheduled terminal, the demodulation reference signal (DMRS) port allocation information of the co-scheduled terminal.

13. The interference processing method according to any one of claims 1 to 12, further comprising:

pre-negotiating configuration information with the base station, wherein the configuration information comprises: at least one of a number of the co-scheduled terminal, a modulation order of the co-scheduled terminal, time domain resource assignment information of the co-scheduled terminal, frequency domain resource assignment information of the co-scheduled terminal, demodulation reference signal (DMRS) port allocation information of the co-scheduled terminal;
wherein the indication information is used to indicate adopting the configuration information or a subset of the configuration information.

14. The interference processing method according to any one of claims 1, 9 to 11, and 13, wherein, the indication information comprises at least one of: configuration information of a demodulation reference signal (DMRS) of each co-scheduled terminal, modulation and coding scheme table information of each co-scheduled terminal, configuration information of a channel state information reference signal (CSI-RS) of each co-scheduled terminal, configuration information of a phase tracking reference signal (PT-RS) of each co-scheduled terminal, configuration information of a tracking reference signal (TRS) of each co-scheduled terminal, time domain resource configuration information of the control channel of each co-scheduled terminal, time domain and frequency domain resource assignment information of each co-scheduled terminal, a number of co-scheduled terminals, modulation order information of each co-scheduled terminal, data layer number information of each co-scheduled terminal, DMRS port allocation information of each co-scheduled terminal.

15. The interference processing method according to any one of claims 1 to 14, wherein, the indication information is carried by at least one of downlink control information (DCI), radio resource control (RRC) signaling, medium access control (MAC) control element (CE).

16. The interference processing method according to any one of claims 1 to 15, further comprising: transmitting capability information to the base station, wherein the capability information comprises: information indicating whether the terminal supports inter-terminal interference processing for MU-MIMO.

17. The interference processing method according to claim 16, wherein, the capability information comprises at least one of: information indicating whether the terminal supports inter-terminal interference processing for MU-MIMO terminals based on an enhanced minimum mean square error interference rejection combining (E-MMSE-IRC) receiver, information indicating whether the terminal supports interference cancellation between MU-MIMO terminals based on a low complexity maximum likelihood (R-ML) receiver.

18. The interference processing method according to claim 16 or 17, wherein the receiving indication information transmitted by the base station comprises:
in a case that the capability information comprises information indicating that the terminal supports inter-terminal interference processing for MU-MIMO, receiving the indication information transmitted by the base station.

**19.** The interference processing method according to any one of claims 16 to 18, further comprising:
receiving capability query information transmitted by the base station.

**20.** An interference processing method, performed by a base station, comprising:
transmitting indication information to a terminal, wherein the indication information is used to indicate whether a current downlink transmission has a transmission of a Multi-User Multiple-Input Multiple-Output (MU-MIMO) co-scheduled terminal and/or related information of the co-scheduled terminal, so that the terminal performs interference processing according to the indication information.

**21.** The interference processing method according to claim 20, wherein the related information of the co-scheduled terminal comprises a modulation order of the co-scheduled terminal,

the indication information is first indication information, used to indicate that the current downlink transmission does not have a transmission of a MU-MIMO co-scheduled terminal, or
the indication information is second indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists.

**22.** The interference processing method according to claim 20, wherein the related information of the co-scheduled terminal comprises a modulation order of the co-scheduled terminal,

the indication information is third indication information, used to indicate that the current downlink transmission does not have a transmission of a MU-MIMO co-scheduled terminal; or
the indication information is fourth indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists; or
the indication information is fifth indication information, used to indicate that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists.

**23.** The interference processing method according to claim 20, wherein the related information of the co-scheduled terminal comprises a modulation order of the co-scheduled terminal,

the indication information is sixth indication information, used to indicate that the current downlink transmission does not have a transmission of a MU-MIMO co-scheduled terminal; or
the indication information is seventh indication information, used to indicate that the current downlink transmission has a transmission of a MU-MIMO co-scheduled terminal, and the co-scheduled terminal and the terminal adopt a same modulation order on all resource units allocated to the terminal or all resource units where the co-scheduled terminal exists, and the modulation order; or
the indication information is eighth indication information, used to indicate that the current downlink transmission has a transmission of a MU-MIMO co-scheduled terminal, and the co-scheduled terminal and the terminal adopt a same modulation order on any one resource unit allocated to the terminal or any one resource unit where the co-scheduled terminal exists.

**24.** The interference processing method according to any one of claims 20 to 23, wherein the related information of the co-scheduled terminal comprises a configuration status of the co-scheduled terminal, and the indication information is used to indicate whether a configuration of the co-scheduled terminal meets a preset condition.

**25.** The interference processing method according to claim 24, wherein the preset condition comprises: at least one of time domain resource assignment information of the co-scheduled terminal, frequency domain resource assignment information of the co-scheduled terminal, a demodulation reference signal (DMRS) sequence, a precoding resource block bundling size (PRB bundling size), location information of a channel state information reference signal (CSI-RS), location information of a phase tracking reference signal (PT-RS), the preset condition is the same as the terminal.

26. The interference processing method according to claim 20, wherein:

the related information of the co-scheduled terminal comprises: at least one of a number of the co-scheduled terminal, a modulation order of the co-scheduled terminal, time domain resource assignment information of the co-scheduled terminal, frequency domain resource assignment information of the co-scheduled terminal, demodulation reference signal (DMRS) port allocation information of the co-scheduled terminal;
the indication information is used to indicate at least one of the number of the co-scheduled terminal, the modulation order of the co-scheduled terminal, the time domain resource assignment information of the co-scheduled terminal, the frequency domain resource assignment information of the co-scheduled terminal, the demodulation reference signal (DMRS) port allocation information of the co-scheduled terminal.

27. The interference processing method according to claim 20, wherein,
the indication information comprises at least one of: configuration information of a demodulation reference signal (DMRS) of each co-scheduled terminal, modulation and coding scheme table information of each co-scheduled terminal, configuration information of a channel state information reference signal (CSI-RS) of each co-scheduled terminal, configuration information of a phase tracking reference signal (PT-RS) of each co-scheduled terminal, configuration information of a tracking reference signal (TRS) of each co-scheduled terminal, time domain resource configuration information of the control channel of each co-scheduled terminal, time domain and frequency domain resource assignment information of each co-scheduled terminal, a number of co-scheduled terminals, modulation order information of each co-scheduled terminal, data layer number information of each co-scheduled terminal, DMRS port allocation information of each co-scheduled terminal.

28. The interference processing method according to any one of claims 20 to 27, further comprising:

receiving capability information transmitted by the terminal, wherein the capability information comprises: information indicating whether the terminal supports inter-terminal interference processing for MU-MIMO;
wherein the transmitting indication information to the terminal comprises:
in a case that the capability information comprises information indicating that the terminal supports inter-terminal interference processing for MU-MIMO, transmitting the indication information to the terminal.

29. The interference processing method according to claim 28, further comprising:
transmitting capability query information to the terminal.

30. A terminal, comprising:

a receiving module, configured to receive indication information transmitted by a base station, wherein the indication information is used to indicate whether a current downlink transmission has a transmission of a Multi-User Multiple-Input Multiple-Output (MU-MIMO) co-scheduled terminal and/or related information of the co-scheduled terminal;
an interference processing module, configured to perform interference processing according to the indication information.

31. A base station, comprising:
a transmitting module, configured to transmit indication information to a terminal, wherein the indication information is used to indicate whether a current downlink transmission has a transmission of a Multi-User Multiple-Input Multiple-Output (MU-MIMO) co-scheduled terminal and/or related information of the co-scheduled terminal; so that the terminal performs interference processing according to the indication information.

32. An electronic device, comprising:

a processor; and
a memory coupled to the processor, configured to store instructions, which, when executed by the processor, cause the processor to perform the interference processing method according to any one of claims 1 to 29.

33. A computer-readable storage medium, having a computer program stored thereon, wherein the computer program, when executed by a processor, implements steps of the method according to any one of claims 1 to 29.

34. An interference processing system, comprising: the terminal according to claim 30 and the base station according to claim 31.

35. A computer program product, comprising: instructions, which, when executed by a processor, cause the processor to perform the interference processing method according to any one of claims 1 to 29.

36. A computer program, comprising: instructions, which, when executed by a processor, cause the processor to perform the interference processing method according to any one of claims 1 to 29.

| Base station transmits indication information to a terminal | S102 |

↓

| The terminal performs interference processing according to the indication information | S104 |

FIG. 1

| Base station transmits capability query information to a terminal | S202 |

↓

| The terminal transmits capability information to the base station | S204 |

↓

| In a case that the capability information comprises information indicating that the terminal supports inter-terminal interference processing for MU-MIMO, the base station transmits indication information to the terminal | S206 |

↓

| The terminal performs interference processing according to the indication information | S208 |

FIG. 2

**30**

```
┌─────────────────────────────────────────────┐
│   ┌─────────────────────────────────────┐   │
│   │        Receiving module             │   │
│   │             310                     │   │
│   └─────────────────────────────────────┘   │
│   ┌─────────────────────────────────────┐   │
│   │  Interference processing module     │   │
│   │             320                     │   │
│   └─────────────────────────────────────┘   │
│   ┌─────────────────────────────────────┐   │
│   │       Transmitting module           │   │
│   │             330                     │   │
│   └─────────────────────────────────────┘   │
└─────────────────────────────────────────────┘
```

FIG. 3

**40**

```
┌─────────────────────────────────────────────┐
│   ┌─────────────────────────────────────┐   │
│   │       Transmitting module           │   │
│   │             410                     │   │
│   └─────────────────────────────────────┘   │
│   ┌─────────────────────────────────────┐   │
│   │        Receiving module             │   │
│   │             420                     │   │
│   └─────────────────────────────────────┘   │
└─────────────────────────────────────────────┘
```

FIG. 4

FIG. 5

FIG. 6

7

```
┌─────────────────────────────────────┐
│                                     │
│   ┌─────────────────────────────┐   │
│   │         Terminal            │   │
│   │           30                │   │
│   └─────────────────────────────┘   │
│                 │                   │
│   ┌─────────────────────────────┐   │
│   │       Base station          │   │
│   │           40                │   │
│   └─────────────────────────────┘   │
│                                     │
└─────────────────────────────────────┘
```

FIG. 7

## INTERNATIONAL SEARCH REPORT

| International application No. |
|---|
| **PCT/CN2024/117104** |

| A. | CLASSIFICATION OF SUBJECT MATTER |
|---|---|

H04W72/231(2023.01)i

According to International Patent Classification (IPC) or to both national classification and IPC

| B. | FIELDS SEARCHED |
|---|---|

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

CNTXT, ENTXT, DWPI, 3GPP: 多用户, 多, 出, 入, 干扰, 指示, 复用, 能力, MU-MIMO, interfere, ability, capability

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 118283596 A (TECHNOLOGY INNOVATION CENTER OF CHINA TELECOM CORP., LTD. et al.) 02 July 2024 (2024-07-02) <br> description, paragraphs 59-121 | 1-36 |
| PX | CN 118282562 A (CHINA TELECOM CORP., LTD.) 02 July 2024 (2024-07-02) <br> description, paragraphs 73-136 | 1-36 |
| X | CN 105792373 A (CHINA ACADEMY OF TELECOMMUNICATIONS TECHNOLOGY) 20 July 2016 (2016-07-20) <br> description, paragraphs 81-106 and 194-195 | 1-36 |
| X | CN 110167040 A (SONY CORP.) 23 August 2019 (2019-08-23) <br> claims 1-18 | 1-36 |
| A | CN 115150035 A (CHINA TELECOM CORP., LTD.) 04 October 2022 (2022-10-04) <br> entire document | 1-36 |
| A | US 2015215017 A1 (LG ELECTRONICS INC.) 30 July 2015 (2015-07-30) <br> entire document | 1-36 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2024** | **21 November 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/117104**

| Patent document cited in search report | | | Publication date (day/month/year) | Patent family member(s) | | | Publication date (day/month/year) |
|---|---|---|---|---|---|---|---|
| CN | 118283596 | A | 02 July 2024 | None | | | |
| CN | 118282562 | A | 02 July 2024 | WO | 2024217488 | A1 | 24 October 2024 |
| CN | 105792373 | A | 20 July 2016 | None | | | |
| CN | 110167040 | A | 23 August 2019 | WO | 2019154390 | A1 | 15 August 2019 |
| | | | | US | 2020336181 | A1 | 22 October 2020 |
| | | | | KR | 20200116904 | A | 13 October 2020 |
| CN | 115150035 | A | 04 October 2022 | None | | | |
| US | 2015215017 | A1 | 30 July 2015 | None | | | |

Form PCT/ISA/210 (patent family annex) (July 2022)

**EP 4 776 731 A1**

**Patent documents cited in the description**

- CN 202311160860